(19) Europäisches Patentamt
European Patent Office
Office européen des brevets

(11) **EP 4 664 418 A1**

(12) **EUROPEAN PATENT APPLICATION**
published in accordance with Art. 153(4) EPC

(43) Date of publication:
**17.12.2025 Bulletin 2025/51**

(21) Application number: **24767464.1**

(22) Date of filing: **11.03.2024**

(51) International Patent Classification (IPC):
**G06V 10/778** (2022.01)   **G06V 10/96** (2022.01)
**G06V 10/80** (2022.01)   **G06V 30/182** (2022.01)
**G06V 10/46** (2022.01)   **G06N 3/0455** (2023.01)
**G06N 3/0985** (2023.01)

(52) Cooperative Patent Classification (CPC):
**G06N 3/0455; G06N 3/0985; G06V 10/46;**
**G06V 10/778; G06V 10/80; G06V 10/96;**
**G06V 30/182**

(86) International application number:
**PCT/KR2024/003118**

(87) International publication number:
**WO 2024/186177 (12.09.2024 Gazette 2024/37)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **09.03.2023 KR 20230030861**

(71) Applicant: **LG Management Development Institute Co., Ltd.**
**Seoul 07336 (KR)**

(72) Inventors:
• **KIM, Bum Soo**
  **Seoul 07803 (KR)**
• **JO, Yeon Sik**
  **Seoul 07791 (KR)**
• **KIM, Jin Hyung**
  **Daejeon 34140 (KR)**
• **KIM, Seung Hwan**
  **Seongnam-si, Gyeonggi-do 13586 (KR)**

(74) Representative: **BCKIP Part mbB**
**MK1**
**Landsbergerstraße 98, 3.Stock**
**80339 München (DE)**

(54) **METHOD FOR PRE-TRAINING VISION-LANGUAGE TRANSFORMER, AND ARTIFICIAL INTELLIGENCE SYSTEM COMPRISING VISION-LANGUAGE TRANSFORMER PRE-TRAINED THROUGH SAME METHOD**

(57)   The present disclosure relates to a method and a system for promptly training a simplified vision-language transformer, in which large uncurated datasets are augmented through image enlargement and/or masking, etc. and vision-language transformers are pre-trained by reflecting, through a knowledge distillation framework, misaligned information between an augmented image and text upon the augmentation, thereby reducing data processing overhead.

FIG. 4

**Description**

[TECHNICAL FIELD]

The present disclosure relates to a method for pre-training a transformer with vision and language data, and an artificial intelligence system including a vision transformer pre-trained by the method.

[BACKGROUND]

Recently, with the emergence of vision-language pretraining (VLP) models pre-trained on large-scale general domain data, AI-based computer vision processing technology has been rapidly developing.

In particular, vision transformers trained on large-scale image-text data sets using technologies such as global self-attention and contrastive language-image pretraining, as in Patent Art Literature 1, have illustrated innovative progress in downstream tasks such as various and difficult vision tasks.

However, in order to fully train global self-attention, which is mainly driven by vision transformers, a large-scale data set is required, and there is a problem of excessive data processing overhead.

In order to secure such a large data set, many methods are used to secure various data by augmenting language data or/and vision data, for example, randomly applying rotation, flipping, resizing, cropping, color adjustment, enlargement, cropping, and adding Gaussian noise to an existing image.

During the process of augmenting the image, particularly, if a specific area is randomly enlarged or reduced, cropped, or the like, a misalignment problem occurs where the text matched to the image that is the original augmentation target does not match.

In addition, if the vision-language transformer is pre-trained in the conventional way based on the pair of texts that matched the pre-augmented image and the misaligned augmented image, the final performance of the pre-trained vision-language transformer deteriorates.

To overcome these problems, Prior Art Literature 2 has proposed a technique to introduce an additional external module that detects misalignment through an object detector and corrects the text through a summary extractor when misalignment is detected, and Prior Art Literature 3 has proposed a technique to match the alignment during pre-training through station embedding. However, when using the external module as described above, there is a problem that the amount of data processing increases, which places a large burden on pre-training.

(Patent Literature 1) Prior Art Literature 1: Alec Radford, Jong Wook Kim, Chris Hallacy, Aditya Ramesh, Gabriel Goh, Sandhini Agarwal, Girish Sastry, Amanda Askell, Pamela Mishkin, Jack Clark, Gretchen Krueger, Ilya Sutskever. Learning Transferable Visual Models From Natural Language Supervision, on 26 Feb 2021

(Patent Literature 2) Prior Art Literature 2: Yuting Gao, Jinfeng Liu, Zihan Xu, Jun Zhang, Ke Li, and Chunhua Shen. Pyramidclip: Hierarchical feature alignment for vision-language model pretraining. arXiv preprint ar-Xiv:2204.14095, 2022. 1, 2, 3

(Patent Literature 3) Prior Art Literature 3: Janghyeon Lee, Jongsuk Kim, Hyounguk Shon, Bumsoo Kim, Seung Hwan Kim, Honglak Lee, and Junmo Kim. Uniclip: Unified framework for contrastive language-image pretraining. In Advances in Neural Information Processing Systems, 2022. 1, 2, 3, 5, 6, 7

[DISCLOSURE]

[TECHNICAL PROBLEM]

An object of a method for pre-training a vision-language transformer according to the present disclosure is to secure pre-training data of a plurality of image-text pairs by randomly enlarging or masking a plurality of image data required for pre-training.

In addition, another object of the method for pre-training a vision-language transformer according to the present disclosure is to learn the vision-language transformer by utilizing the misalignment of image-text pairs that occurs when randomly enlarging or masking images as useful information.

In addition, still another object of the present disclosure is to develop an artificial intelligence system that can effectively perform various vision tasks using the vision-language transformer pre-trained in this way.

[TECHNICAL SOLUTION]

A method for pre-training a vision-language transformer according to an embodiment of the present disclosure proposes a method of randomly augmenting an image to intentionally induce a misalignment between the augmented image and text, and pre-training the vision-language transformer by using the misalignment as useful information.

In detail, the method for pre-training a vision-language transformer according to the embodiment of the present disclosure proposes a contrast image-text pre-training method (Misalign, Contrast then Distill: MCD, hereinafter "MCD pre-training method") using knowledge distillation that can pre-train by utilizing the misalignment of the augmented image-text pair as useful information.

Specifically, according to an embodiment of the present disclosure, there is provided a method for pre-training a vision-language transformer with a dataset of a plurality of original image-text pairs by a computing system including a memory and a processor, the method including: randomly augmenting the original image to generate a plurality of augmented images; inputting text matched to the original image into a text encoder to output text feature vector representations; inputting the original image and the plurality of augmented images into a teacher image encoder to output first image feature vector representations; inputting the original image and the plurality of augmented images into a student image encoder to output second image feature vector representations; generating a first alignment matrix for the text feature vector representations and the first image feature vector representations; learning the first alignment matrix so that the text feature vector representations and the first image feature vector representations are aligned to have similarity according to a positive and negative mapping relationship of the image-text pair; and aligning the second alignment matrix to predict output of the learned first alignment matrix and performing knowledge distillation on the student image encoder.

In this case, the inputting of the images into the teacher image encoder to output the first image feature vector representations may include outputting the first image feature vector representations through a plurality of self-attention layers and feed-forward network layers for the original images and the plurality of augmented images.

Moreover, the inputting of the images into the student image encoder to output the second image feature vector representations may include of inputting the original images and the plurality of augmented images to a token sparsification layer based on output values from the plurality of self-attention layers and performing token sparsification.

In addition, the learning of the first alignment matrix so that the text feature vector representations and the first image feature vector representations are aligned may include determining a positive feature vector representation pair and a negative feature vector representation pair between the text feature vector representations and the first image feature vector representations according to a mapping relationship between the original image-text pair and the augmented image-text pair, and learning the teacher image encoders according to a loss function that makes a distance between the positive feature vector representation pairs closer and a distance between the negative feature vector representation pairs farther for similarity alignment.

Moreover, the learning of the encoders according to the loss function may include applying a momentum stop gradient to the teacher image encoder to block backpropagation during learning for similarity alignment according to the loss function.

In addition, the performing of the knowledge distillation on the student image encoder may include performing knowledge distillation so that the output value of the first alignment matrix according to the similarity alignment is predicted by the second alignment matrix.

Moreover, the performing of the knowledge distillation on the second alignment matrix includes blocking backpropagation to the text encoder during the knowledge distillation.

Further, the performing of the knowledge distillation on the second alignment matrix includes performing knowledge distillation so that a parameter of the second alignment matrix follows a parameter of the first alignment matrix.

Moreover, the performing of the knowledge distillation so that the parameter of the second alignment matrix follows the parameter of the first alignment matrix includes updating the parameter of the second alignment matrix with an exponential moving average (EMA) to the parameter of the first alignment matrix.

Moreover, the performing of the knowledge distillation on the second alignment matrix may include performing the knowledge distilling by defining a loss function that reflects misalignment information between the augmented image and the text through a distance between the first image feature vector representation and the text feature vector representation and a distance between the second image feature vector representation and the text feature vector representation.

Furthermore, the performing of the knowledge distillation by defining the loss function based on the distances may include calculating a first Euclidean distance between the original image feature vector representation output by the student image encoder and the text feature vector representation, and a second Euclidean distance between the augmented image feature vector representation output by the student image encoder and the text feature vector representation, and calculating a first log ratio that calculates a ratio of the first Euclidean distance and the second Euclidean distance in a log scale.

Moreover, the performing of the knowledge distillation by defining the loss function based on the distances may include calculating a third Euclidean distance between the original image feature vector representation output by the teacher image encoder and the text feature vector representation, and a fourth Euclidean distance between the augmented image feature vector representation output by the teacher image encoder and the text feature vector representation, and calculating a second log ratio that calculates a ratio of the third Euclidean distance and the fourth Euclidean distance in a log scale.

In addition, the performing of the knowledge distillation by defining the loss function based on the distances may include performing the knowledge distillation by defining a difference between the first log ratio and the second log ratio as a loss function for aligning the second alignment matrix to be approximate to the first alignment matrix.

In this case, the loss function for aligning the first alignment matrix and the second alignment matrix may be defined as

$$\ell_i = \left\| \log \frac{D(I_j, T_i)}{D(I'_j, T_i)} - \log \frac{D(\bar{I}_j, T_i)}{D(\bar{I}'_j, T_i)} \right\|_1$$

Moreover, the method may further include performing an update through a stop gradient to prevent backpropagation between the teacher image encoder and the text encoder.

In addition, according to an embodiment of the present disclosure, there is provided a vision-language transformer pre-trained by a computing system including a memory and a processor, the vision-language transformer including: a text encoder that inputs texts and outputs text feature vector representations; a teacher image encoder that inputs original images and a plurality of augmented images augmented from the original images and outputs first image feature vector representations; and a student image encoder that inputs the original images and the plurality of augmented images augmented from the original images and outputs second image feature vector representations, in which the teacher image encoder and the text encoder learn a first alignment matrix by similarity-aligning the text feature vector representations and the first image feature vector representations, and the student image encoder performs knowledge distillation so that a second alignment matrix for the text feature vector representations and the second image feature vector representations predicts an output value of the first alignment matrix.

Moreover, according to an embodiment of the present disclosure, there is provided an artificial intelligence system including a vision-language transformer capable of performing vision tasks with improved performance by securing a large amount of data required for pre-training through the image augmentation method and efficiently pre-training the vision-language transformer with a large amount of misaligned image-text pairs secured.

[ADVANTAGEOUS EFFECTS]

According to the method for pre-training a vision-language transformer of an embodiment of the present disclosure, it is possible to randomly augment an image to expand the plurality of misaligned image-text pairs into pre-training data, thereby easily securing a large number of pre-training data that includes various and useful information in various aspects.

In addition, according to the method for pre-training a vision-language transformer of an embodiment of the present disclosure, it is possible to provide a vision-language transformer with improved performance through an MCD pre-training method that can learn misalignment of augmented image-text pairs as useful information.

In addition, according to the artificial intelligence system including the vision-language transformer pre-trained according to an embodiment of the present disclosure, it is possible to effectively perform vision tasks such as image classification, object detection, image segmentation, image captioning, image analysis, and optical character recognition by using the vision-language transformer learned with pre-training data that includes various and useful information in various aspects.

[BRIEF DESCRIPTION OF THE DRAWINGS]

Fig. 1 illustrates an example of a block diagram of a computing system that executes an MCD pre-training method according to one embodiment of the present disclosure.

Fig. 2 illustrates an example of a block diagram of a computing device that pre-trains a vision-language transformer according to the MCD pre-training method according to one embodiment of the present disclosure and executes the pre-trained vision-language transformer.

Fig. 3 illustrates an example of a block diagram of another aspect of a computing device that performs the MCD pre-training method according to one embodiment of the present disclosure and executes the pre-trained vision-language transformer.

Fig. 4 conceptually illustrates a framework of the MCD pre-training method according to one embodiment of the present disclosure.

Fig. 5 illustrates a meta-architecture of the framework of the MCD pre-training method according to one embodiment of the present disclosure.

[DETAILED DESCRIPTION]

The present disclosure may be subjected to various transformations and have various embodiments, and specific embodiments are illustrated in the drawings and described in detail in the detailed description. The effects and features of the present disclosure and the methods for achieving them will become clear with reference to the embodiments described in detail below together with the drawings. However, the present disclosure is not limited to the embodiments disclosed below and may be implemented in various forms. In the embodiments below, terms such as first, second, or the like are not used in a limited sense but are used for the purpose of distinguishing one component from another component. In addition, singular expressions include plural expressions unless the context clearly indicates otherwise. In addition, terms such as include or have mean that a feature or component described in the specification exists, and do not preemptively exclude the possibility that one or more other features or components may be added. In addition, in the drawings, the sizes of components may be exaggerated or reduced for convenience of explanation. For example, the sizes and thicknesses of each component illustrated in the drawings are arbitrarily illustrated for convenience of explanation, and therefore the present disclosure is not necessarily limited to what is illustrated.

Fig. 1 illustrates an example of a block diagram of a computing system that executes an MCD pre-training method according to one embodiment of the present disclosure.

Referring to Fig. 1, a computing system 1000 according to one embodiment of the present disclosure includes a user computing device 110, a training computing system 150, and a server computing system 130, and each device and system are communicatively connected through a network 170.

According to various embodiments of the present disclosure, 1) the user computing device 110 may pre-train a vision-language transformer 120 locally and execute an application including the learned vision-language transformer 120, 2) the server computing system 130 communicating with the user computing device 110 may pre-train the vision-language transformer 120 or/and 140 and provide the vision-language transformer 120 or/and 140 and/or an application including the vision-language transformer 120 or/and 140 directly or in the form of a web service to the user computing device 110, and 3) the user computing device 110 and the server computing system 130 may be linked to each other to pre-train the vision-language transformer 120 or/and 140 or execute the pre-trained vision-language transformer 120 or/and 140 to provide various application services.

In addition, according to various embodiments of the present disclosure, the user computing device 110 and/or the server computing system 130 may train the vision-language transformed 120 through interaction with the training computing system 150 that is communicatively connected via the network 170. In this case, the training computing system 150 may be separate from the server computing system 130 or may be a part of the server computing system 130.

That is, the method for pre-training the vision-language transformer according to the embodiment may be such that 1) the user computing device 110 may pre-train the vision-language transformer 120 directly locally, 2) the server computing system 130 and the user computing device 110 may interact with each other via the network and pre-train, and 3) a separate training computing system 150 may pre-train the vision-language transformer using various training techniques and learning techniques.

Moreover, the training computing system 150 may be implemented in a manner that transmits the pre-trained vision-language transformer 120 or/and 140 to the user computing device 110 or/and the server computing system 130 through a network to provide or/and update the pre-trained vision-language transformer.

In some embodiments, the training computing system 150 may be part of the server computing system 130 or part of the user computing device 110.

In addition, the present disclosure discloses the method and system for pre-training a vision-language transformer that may be included in an application that performs various downstream tasks by performing additional tasks such as fine-tuning the pre-trained vision-language transformer.

The user computing device 110 may include any type of computing device, such as a smart phone, a mobile phone, a digital broadcasting device, a personal digital assistant (PDA), a portable multimedia player (PMP), a desktop, a wearable device, an embedded computing device, and/or a tablet PC.

The user computing device 110 includes at least one processor 111 and memory 112. Here, the processor 111 may be composed of at least one among a central processing unit (CPU), a graphics processing unit (GPU), application specific integrated circuits (ASICs), digital signal processors (DSPs), digital signal processing devices (DSPDs), programmable logic devices (PLDs), field programmable gate arrays (FPGAs), controllers, micro-controllers, microprocessors, and/or other electrical units for performing functions, or a plurality of processors electrically connected.

The memory 112 may include one or more non-transitory/transitory computer-readable storage media such as RAM, ROM, EEPROM, EPROM, flash memory devices, magnetic disks, and combinations thereof, and may include web storage of a server that performs a storage function of memory on the Internet. The memory 112 may store data 113 and instructions 114 necessary for the at least one processor 111 to perform operations such as pre-training the vision-language transformer 120 or executing the application including the pre-trained vision-language transformer 120.

In one embodiment, the user computing device 110 may store at least one machine learning model (that is, vision-language transformer 120).

In detail, the vision-language transformer 120 of one embodiment may be various machine learning models such as a plurality of neural networks (for example, Deep neural networks) or other types of machine learning models including nonlinear models and/or linear models, and may be composed of a combination of these.

Moreover, the neural networks may include at least one of feed-forward neural networks, recurrent neural networks (for example, long short-term memory recurrent neural networks), convolutional neural networks, or/and other types of neural networks.

In one embodiment, the user computing device 110 may receive at least one vision-language transformer 120 from the server computing system 130 through the network 170, store the received vision-language transformer 120 in memory, and then execute the stored vision-language transformer 120 by the processor 111 to operate an application having various vision-based tasks.

In another embodiment, the server computing system 130 may include at least one machine learning model (for example, vision-language transformer 140) to perform operations via the vision-language transformer 140, and may provide a user with an artificial intelligence system that performs various tasks using the vision-language transformer 140 in conjunction with the user computing device 110 by communicating data related thereto with the user computing device 110. For example, the user computing device 110 may perform vision tasks including the vision-language transformer 140 in a manner that the server computing system 130 provides output for the user's input using the vision-language transformer 140 via the web. In addition, the vision-language transformers 120 or/and 140 may be implemented in such a way that at least one of the vision-language transformers 120 or/and 140 are executed on the user computing device 110 and the other is executed on the server computing system 130.

In addition, the user computing device 110 may include at least one input component that detects user input. For example, the user input component may include a touch sensor (for example, a touch screen or/and a touch pad, or the like) that detects touch of the user's input medium (for example, a finger or a stylus), an image sensor that detects user motion input, a microphone that detects user voice input, a button, a mouse, and/or a keyboard, or the like. In addition, the user input component may include an interface and an external controller when receiving input to an external controller (for example, a mouse, a keyboard, or the like) through the interface.

The server computing system 130 includes at least one processor 131 and a memory 132. Here, the processor 131 may be composed of at least one among a central processing unit (CPU), a graphics processing unit (GPU), application specific integrated circuits (ASICs), digital signal processors (DSPs), digital signal processing devices (DSPDs), programmable logic devices (PLDs), field programmable gate arrays (FPGAs), controllers, micro-controllers, microprocessors, and/or other electrical units for performing functions, or a plurality of processors electrically connected.

Moreover, the memory 132 may include one or more non-transitory/transitory computer-readable storage media such as RAM, ROM, EEPROM, EPROM, flash memory devices, magnetic disks, and combinations thereof. The memory 132 may store data 133 and instructions 134 necessary for the processor 131 to pre-train the vision-language transformer 140 or perform various vision tasks (for example, image detection, classification, segmentation, or the like) using the vision-language transformer 140.

In one embodiment, the server computing system 130 may be implemented including at least one computing device. For example, the server computing system 130 may be implemented to operate a plurality of computing devices according to a sequential computing architecture, a parallel computing architecture, or a combination thereof. In addition, the server computing system 130 may include a plurality of computing devices connected to a network.

In addition, the server computing system 130 may store at least one vision-language transformer 140. For example, the server computing system 130 may include a neural network or/and other multi-layer nonlinear models as the vision-language transformer 140. The exemplary neural network may include a feed-forward neural network, a deep neural network, a recurrent neural network, and a convolutional neural network.

The training computing system 150 includes at least one processor 151 and a memory 152. Here, the processor 151 may be composed of at least one among a central processing unit (CPU), a graphics processing unit (GPU), application specific integrated circuits (ASICs), digital signal processors (DSPs), digital signal processing devices (DSPDs), programmable logic devices (PLDs), field programmable gate arrays (FPGAs), controllers, micro-controllers, microprocessors, and/or other electrical units for performing functions, or a plurality of processors electrically connected.

Moreover, the memory 152 may include one or more non-transitory/transitory computer-readable storage media such as RAM, ROM, EEPROM, EPROM, flash memory devices, magnetic disks, and combinations thereof. The memory 152 may store data 153 and instructions 154 necessary for the processor 151 to perform training of the vision-language transformer.

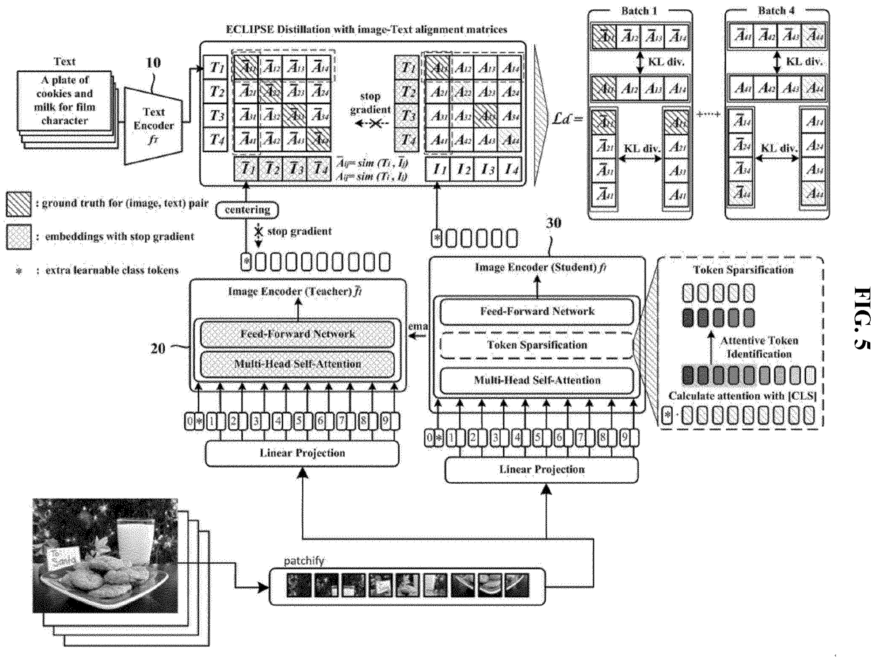

For example, the training computing system 150 may include a model trainer 160 that pre-trains the vision-language transformer 120 or/and 140 stored in the user computing device 110 or/and the server computing system 130 using various training or learning techniques, such as backpropagation of errors (according to the framework illustrated in Fig. 5).

For example, the model trainer 160 may perform updates of one or more parameters of the vision-language transformer 120 or/and 140 in a backpropagation manner based on a defined loss function.

In some implementations, performing backpropagation of errors may include performing truncated backpropagation through time. The model trainer 160 may perform a number of generalization techniques (for example, weight reduction, dropout, knowledge distillation, or the like) to improve the generalization ability of the vision-language transformer 120 or/and 140 being trained.

In particular, the model trainer 160 may train the vision-language transformer 120 or/and 140 based on a set of training data. The training data may include data of different multi-modal modalities, such as images, audio samples, text, or the like. Examples of image types that may be used may include everything from typical RGB images to video frames, LiDAR point clouds, X-ray images, computed tomography scans, hyperspectral images, and/or various other forms of images.

Such trainer data and input data for downstream tasks may be provided by the user computing device 110 or/and the server computing system 130. When the training computing device trains the vision-language transformer 120 for specific data of the user computing device 110, the vision-language transformer 120 may be characterized as a personalized model.

Moreover, the model trainer 160 includes computer logic utilized to provide a desired function. The model trainer 160 may be implemented as hardware, firmware, and/or software that controls a general-purpose processor. For example, in one embodiment, the model trainer 160 includes a program file stored on a storage device, loaded into memory, and executed by one or more processors. In another implementation, the model trainer 160 includes one or more sets of computer-executable instructions stored on a tangible computer-readable storage medium, such as a RAM hard disk or an optical or magnetic medium.

The network 170 includes, but is not limited to, a 3rd Generation Partnership Project (3GPP) network, a Long Term Evolution (LTE) network, a World Interoperability for Microwave Access (WIMAX) network, the Internet, a Local Area Network (LAN), a Wireless Local Area Network (WLAN), a Wide Area Network (WAN), a Personal Area Network (PAN), a Bluetooth network, a satellite broadcasting network, an analog broadcasting network, and/or a Digital Multimedia Broadcasting (DMB) network.

In general, communication over the network 170 may be performed using any type of wired and/or wireless connection, using various communication protocols (for example, TCP/IP, HTTP, SMTP, FTP), encodings or formats (for example, HTML, XML), and/or protection schemes (for example, VPN, Secure HTTP, SSL).

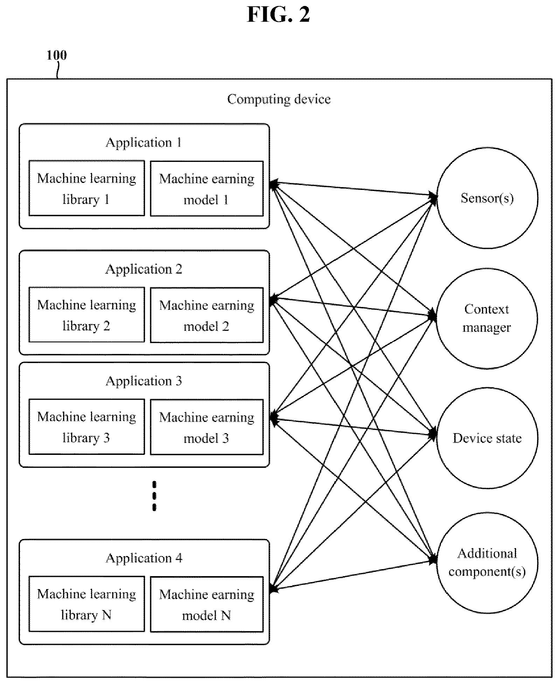

Fig. 2 illustrates an example block diagram of a computing device that pre-trains the vision-language transformer according to a knowledge distillation framework according to one embodiment of the present disclosure and executes the pre-trained vision-language transformer.

In Fig. 2, a computing device 100 included in the user computing device 110, the server computing system 130, and the training computing system 150 includes a plurality of applications (for example, application 1 to application N). Each application may include a machine learning library and one or more vision-language transformers. For example, the applications may include a vision task (for example, detection, classification, segmentation, or the like) application, a text messaging application including the vision task, an email application, a dictation application, a virtual keyboard application, a browser application, a chat-bot application, or the like.

In one embodiment, the computing device 100 may include the model trainer 160 for pre-training the vision-language transformer, and may store and operate the pre-trained vision-language transformer to perform various vision tasks using the vision-language transformer on input data.

Each application of the computing device 100 may communicate with a number of other components of the computing device 100, such as, for example, one or more sensors, a context manager, a device state component, and/or additional components. In one embodiment, each application may communicate with each device component using an API (for example, a public API). In one embodiment, the API used by each application may be specific to that application.

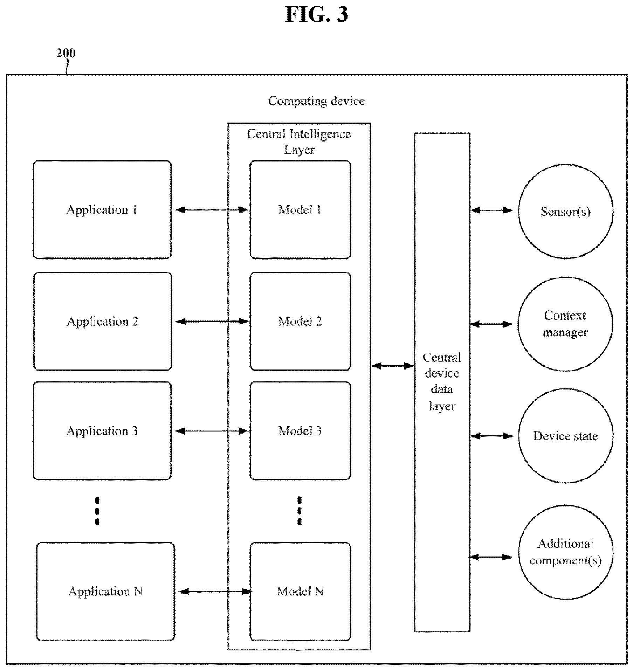

Fig. 3 illustrates an example block diagram of another aspect of a computing device 200 that pre-trains the vision-language transformer through a knowledge distillation framework according to one embodiment of the present disclosure and executes the pre-trained vision-language transformer.

Referring to Fig. 3, the computing device 200 includes a plurality of applications (for example, application 1 to application N). Each application may communicate with a central intelligence layer. For example, the applications may include an image processing application, a text messaging application, an email application, a dictation application, a virtual keyboard application, a browser application, or the like. In one embodiment, each application may communicate with the central intelligence layer (and the models stored therein) using an API (for example, a common API across all applications).

Moreover, the central intelligence layer may include a plurality of vision-language transformers. For example, as illustrated in Fig. 3, at least some of the vision-language transformers may be provided for each application and managed by the central intelligence layer. In other implementations, two or more applications may share a single vision-language transformer. For example, in some implementations, the central intelligence layer may provide a single model for all applications. In some implementations, the central intelligence layer may be included within the operating system of the computing device 200 or implemented differently.

The central intelligence layer may communicate with a central device data layer. The central device data layer may be a centralized data storage for the computing device 200. As illustrated in Fig. 3, the central device data layer may communicate with a number of other components of the computing device 200, such as, for example, one or more sensors, a context manager, a device state component, and/or additional components. In some implementations, the central device data layer may communicate with each device component using an API (for example, a private API).

The techniques described herein may reference servers, databases, software applications, and other computer-based systems, as well as actions taken and information transmitted to or from such systems. It will be appreciated that the inherent flexibility of computer-based systems allows for a wide range of possible configurations, combinations, and division of work and functionality between and among components. For example, the processes described herein may be implemented using a single device or component or multiple devices or components operating in combination. The database and applications may be implemented in a single system or in a distributed system across multiple systems. The distributed components may operate sequentially or in parallel.

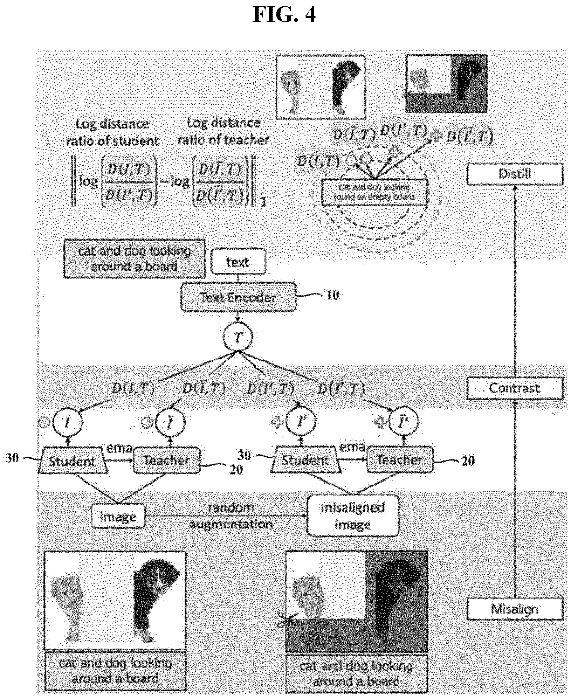

Hereinafter, the process of pre-training the vision-language transformer according to the knowledge distillation framework with a dataset augmented through random image enlargement by the computing system 1000 is described in detail with reference to Figs. 4 to 6.

The vision-language transformer described in the present disclosure refers to a vision-language-based artificial intelligence model (VLP) pre-trained with a large-scale dataset for joint representation of two heterogeneous data types of vision-language (image-text) pairs.

The vision-language transformer according to this embodiment may include a single-stream model that transforms input data that combines images and text, and a dual (multi)-stream model that processes image-text through separate image encoders and text encoders.

In the following embodiments, for the convenience of the work, a vision-language transformer having a dual-stream architecture that pre-trains with a contrastive target on a dataset in which images and texts are matched is described.

The method for pre-training the vision-language transformer according to the embodiment can facilitate the pre-training of a dataset of contrastive image-text pairs by using a knowledge-distilled encoder based on a plurality of augmented image-text pairs obtained through image random augmentation.

Referring to Figs. 4 and 5, a vision-language transformer pre-training archiltecture according to the embodiment includes a text encoder 10, a teacher image encoder 20, and a student image encoder 30. In addition, the student image encoder 30 and the teacher image encoder 20 may include a multi-head self-attention layer and a feed-forward network. In addition, the student image encoder 30 may further include a token sparsification layer.

Here, the image-text dataset for pre-training is an uncurated dataset, meaning data on which, for example, labeling tasks or captioning tasks have not been performed.

In the embodiment, in order to clearly verify the efficiency of the method for pre-training the vision-language transformer according to the present embodiment, at least one of Conceptual Captions (CC) 3M, Yahoo Flickr Creative Commons (YFCC) 15M, and YFCC15M, 88M which are the large-scale open-source datasets may be included as a dataset for pre-training.

In addition, as a downstream dataset for verifying the performance of the pre-trained vision-language transformer according to the present embodiment, zero-shot image-text from Flickr30K or/and MS-COCO may be included.

In particular, the computing system 1000 according to the embodiment of the present disclosure may prepare a plurality of image-text pairs in which image data (hereinafter, "image") and text data (hereinafter, "text"), which are labels for the images, are paired as a pre-training dataset.

Moreover, the computing system 1000 may generate an augmented image by randomly augmenting the original image to increase the diversity of the dataset and improve the generalization ability of the vision-language transformer.

The computing system 1000 according to the embodiment may generate a plurality of augmented images by applying image random enlargement (for example, random crop, random rotation, random flip, color jittering, or/and random grayscale) during image augmentation, in particular, to intentionally cause incorrect alignment between the augmented image and the text.

In addition, the computing system 1000 may additionally generate a plurality of augmented images by applying a method of masking a random portion of the image.

In this way, the additional augmented image generated through random image augmentation may cause serious defects in the text pairs of the original image. Hereinafter, a simple theoretical basis for this is presented.

First, a text feature vector T, an original image feature vector I, and an augmented image feature vector I' are formulated as a Markov Chain $T \rightarrow I \rightarrow I'$, which means that I' depends only on the original image I.

According to a data processing inequality theory that data processing cannot increase the amount of information, a following formula may be derived.

[Mathematical Expression 1]

$$\mathcal{I}(I,\,T) \geq \mathcal{I}(I',\,T)$$

Here, $\mathcal{I}(\cdot)$ represents mutual information, and the case where the two pieces of information are identical is only when the image I and the augmented image I' are captured identically and contain the same information about the text T.

The computing system 1000 according to the embodiment proposes a new method that utilizes the information imbalance of the original image-text pair and the augmented image-text pair as learning information.

Fig. 4 conceptually illustrates the framework of the MCD pre-training method according to the embodiment of the present disclosure.

Referring to Fig. 4, the computing system 1000 according to the embodiment may perform pre-training of the image encoders 20 and 30 and the text encoder 10 by 1) augmenting the original image as described above to generate the plurality of augmented images to generate the original image-text pair and the augmented image-text pair, 2) inputting the original image-text pairs and the plurality of augmented image-text pairs into the teacher image encoder 20, the student image encoder 30, and the text encoder 10, respectively, to output feature vector representations for the image-text pairs, 3) projecting the output image feature representation vectors and the text feature representation vectors according to contrastive objectives to obtain the distance between the feature representation vectors, and 4) distilling the knowledge of the teacher image encoder 20 into the student image encoder 30 based on the obtained distance.

The MCD pre-training process will be described in more detail below.

First, the computing system 1000 may randomly enlarge or/and mask the original image to generate the plurality of augmented images.

Next, the framework of the MCD pre-training method includes the momentum teacher image encoder 20, the student image encoder 30, and the text encoder 10, as illustrated in Fig. 4, and may distill the knowledge of the teacher image encoder 20 into the student image encoder 30 based on the stop gradient.

Here, the momentum teacher image encoder 20 is the teacher image encoder 20 whose model parameters are updated more slowly over time, and may stably train the student image encoder 30.

Moreover, the student image encoder 30 may be a relatively simple (for example, with fewer parameters) machine learning model compared to the teacher image encoder 20 trained to imitate the operation of the teacher image encoder 20.

The teacher and student image encoders 30 are trained to convert the original image and the augmented image into feature representations, and may output image feature vector representations of the input image.

Here, the feature vector representation means a vector representing the features of the image object in n dimensions, and may be called an embedding as a feature vector that combines several features of the converted object into a format that can be processed by the machine learning model and converted into a structured form.

Finally, the text encoder 10 is an encoder that outputs a text feature vector representation T when text is input. In detail, the text encoder 10 is trained to convert the features of the text into feature representations, and can output a text feature vector representation T for the input text.

The computing system 1000 may obtain a first image feature vector representation including an original image feature vector representation (bar I) and an augmented image feature vector representation (bar I') by inputting the original image and the augmented image to the teacher image encoder 20.

In addition, the computing system 1000 may obtain a second image feature vector representation including the original image feature vector representation I and the augmented image feature vector representation I' by inputting the original image and the augmented image into the student image encoder 30.

In addition, the computing system 1000 may obtain the text feature vector representation T by inputting the text matched to the original image into the text encoder 10.

Next, the computing system 1000 may generate a first alignment matrix (bar A) by mapping the text feature vector representations T and the first image feature vector representations output from the teacher image encoder 20 according to the matched positive pairs and the unmatched negative pairs.

Moreover, the computing system 1000 may learn the teacher image encoder 20 and the text encoder 10 by a method (for example, InfoNCE loss (a method of training to maximize the similarity of positive pairs and minimize the similarity of negative pairs)) of aligning the first alignment matrix (bar A) based on the similarity comparison criteria of the output text feature vector representations T and the first image feature vector representations based on the mapped positive/negative criteria.

In this case, in a process of training the first alignment matrix (bar A) composed of the first image feature vector representations for similarity alignment, the teacher image encoder 20 may be a momentum teacher with stop gradient momentum model, and thus, the computing system 1000 may block backpropagation (sg) to the teacher image encoder 20 during similarity alignment learning.

Thereafter, the computing system 1000 may learn according to the loss function so that the spatial distance between positive feature vector representations becomes closer for similarity alignment and the spatial distance between negative feature vector representations becomes farther.

That is, the computing system may perform contrastive learning to define the loss function so that

$$\underbrace{\mathrm{score}(f(x), f(x^+))}_{\text{Positive samples}} >> \underbrace{\mathrm{score}(f(x), f(x^-))}_{\text{Negative samples}}$$ is satisfied.

For example, as described above, the computing system 1000 may learn the teacher image encoder 20 by contrastively learning the first alignment matrix (bar A) so that InfoNCE Loss which is the loss function is applied to the similarity matrix.

Moreover, the computing system 1000 may input the original image and the augmented image into the student image encoder 30 to output the second image feature vector representations.

In this case, the student image encoder 30 may accelerate the pre-training by reconstructing the patch tokens by including the token sparsification layer. However, the token sparsification layer may be omitted.

In detail, the student image encoder 30 may calculate (self-attention) the attention value between images and discard tokens below a predetermined standard according to the attention value between the images calculated.

For example, the student image encoder 30 can discard inattentive tokens according to a fixed ratio $(1-\kappa)$ according to the attention value between patches of the 4th, 7th, and 10th transformer layers among the self-attention layers. Here, $\kappa$ is a token retention rate.

Moreover, the computing system 1000 may generate a second alignment matrix A by mapping the text feature vector representations T and the second image feature vector representations according to the matched positive pairs and the unmatched negative pairs.

Next, the computing system 1000 may perform knowledge distillation so that the second alignment matrix A predicts the output value of the first alignment matrix (bar A) aligned according to the similarity mapping, unlike the existing knowledge distillation method.

That is, the computing system 1000 may perform the knowledge distillation by training the student image encoder 30 so that the second alignment matrix A is aligned by soft-aligning the first alignment matrix (bar A).

In this case, the text encoder 10 and the teacher image encoder 20 may be a momentum model with a stop gradient that blocks backpropagation (sg) to the text encoder 10 during the knowledge distillation.

In detail, the computing system 1000 may learn the parameters of the student image encoder 30 to perform the knowledge distillation so that the second alignment matrix A is aligned according to the first alignment matrix (bar A).

Moreover, the computing system 1000 may update the parameters of the teacher image encoder 20 with an exponential moving average (EMA) based on the parameters of the student image encoder 30.

In this case, the computing system 1000 may perform the knowledge distillation by defining the loss function based on the distance between the image feature vector representation and the text feature vector representation T in order to perform the knowledge distillation by reflecting the misalignment information between the augmented image and the text as described above.

In detail, the computing system 1000 may calculate a first Euclidean distance between the original image feature vector representation I and the text feature vector representation T output by the student image encoder 30, and a second Euclidean distance between the augmented image feature vector representation I' and the text feature vector representation T output by the student image encoder 30, and calculate a first ratio of the first Euclidean distance and the second Euclidean distance, and at this time, a log scale may be applied. That is, the first ratio may be calculated in a log scale to calculate the first log ratio.

In addition, the computing system 1000 may calculate a third Euclidean distance between the original image feature vector representation (bar I) and the text feature vector representation T output by the teacher image encoder 20, and a fourth Euclidean distance between the augmented image feature vector representation (bar I') and the text feature vector representation T output by the teacher image encoder 20, and calculate a second ratio of the third Euclidean distance and the fourth Euclidean distance, and at this time, a log scale may be applied. That is, the second ratio may be calculated in a log scale to calculate the second log ratio.

In addition, the computing system 1000 may learn the encoder by defining the difference between the first log ratio and the second log ratio as the loss function for aligning the second alignment matrix to approximate the first alignment matrix (bar A).

Below, the calculation process for the above pre-training is described in detail through specific Mathematical Expression.

Specifically, a first alignment matrix $\overline{A}_{ij}$ and a second alignment matrix $A_{ij}$ for a function $\overline{f}_l$ for the momentum

teacher image encoder 20 with stop gradient, a function $f_T$ for the momentum text encoder 10 with stop gradient, and a function $f_I$ for the student encoder may be defined as in the following Mathematical Expression 2.

[Mathematical Expression 2]

$$A_{ij} = \text{sim}(T_i, \text{sg}(I_j)), \quad A_{ij} = \text{sim}(\text{sg}(T_i), I_j)$$

Here, sg is the stop gradient, $\bar{I}_j \models \bar{f}_I\left(x_j^I\right)$ and $I_j \models f_I\left(x_j^I\right)$ are the image feature vector representations for the jth image using the teacher image encoder 20 and the student image encoder 30, respectively, $T_i = f_T\left(x_i^T\right)$ is the text feature vector representations T for the ith text, $A \in R^{N \times N}$ is the alignment matrix for the image and text feature representations, where N is the batch size for image-text pairs, and sim means the cosine similarity function.

As mentioned above, a loss for the first alignment matrix (bar A) can be obtained using the InfoNCE loss.

Moreover, as mentioned above, the loss function may be defined and pre-trained based on the distance between the original image feature vector representation (I, bar I) and the augmented image feature vector representation (I', bar I') and the text feature vector representation T, and this process is explained through Mathematical Expressions 3 to 6.

In addition, the computing system 1000 may define a loss function for aligning the first alignment matrix (bar A) and the second alignment matrix A using the InfoNCE loss (Mathematical Expression 3).

[Mathematical Expression 3]

$$\ell_i = \left\| \log \frac{D(I_j, T_i)}{D(I'_j, T_i)} - \log \frac{D(\bar{I}_j, T_i)}{D(\bar{I}'_j, T_i)} \right\|_1$$

Here, $l_i$ means InfoNCE loss, $D(v, u)$ means the Euclidean distance between vectors and vectors, and may be calculated through cosine similarity.

Therefore, $D(I_j, T_i)$ is the first Euclidean distance, $D\left(I'_j, T_i\right)$ is the second Euclidean distance, $D(\bar{I}_j, T_i)$ is the third Euclidean distance, and $D\left(\bar{I}'_j, T_i\right)$ is the fourth Euclidean distance.

Specifically, in the embodiment, the original image feature vector $I_j$ and the text feature vector $T_j$ are L2 normalized vectors, and the Euclidean distance may be calculated through $D(I_j, T_j) = 2(1 - A_{ij})$ which is the cosine similarity function.

Next, the computing system 1000 may gradually distill the knowledge of the teacher image encoder 20 into the student image encoder 30 based on the above loss function.

In detail, the computing system 1000 performs the knowledge distillation to predict that the second alignment matrix and the first alignment matrix are identical.

In detail, the distillation loss is defined as the KL divergence for each row and column between the first alignment matrix (bar A) and the second alignment matrix A. In detail, the overall distillation loss is defined as the KL divergence for each row and column between the first alignment matrix (bar A) and the second alignment matrix (A). If σ is the softmax function, the KL divergence between the first alignment matrix (bar A ) and the second alignment matrix (A), denoted as $D_{KL}\left(\bar{A} \| A\right)$, can be expressed as shown in mathematical equation (4), and the distillation loss can be calculated according to mathematical equation (4).

[Mathematical Expression 4]

$$D_{\mathrm{KL}}(\bar{A}\|A) = \sum_{i=1}^{N} \sigma(\bar{A}_i) \log \frac{\sigma(A_i)}{\sigma(\bar{A}_i)}$$

In detail, the overall distillation loss, $\mathcal{L}_{\mathrm{distill}}$ is the average of the KL losses for the row vector and the column vector, and thus can be defined as in the following Mathematical Expression 5.

[Mathematical Expression 5]

$$\mathcal{L}_{\mathrm{distill}}(\bar{A}, A) = \tfrac{1}{2}\left(D_{\mathrm{KL}}(\bar{A}\|A) + D_{\mathrm{KL}}(\bar{A}^T\|A^T)\right)$$

To accelerate the training of the student image encoder 30, and to balance the knowledge distillation training with the teacher image encoder 20 training, the final loss of the student image encoder 30, $\mathcal{L}_{\mathrm{student}}$, can be calculated according to mathematical equation (6) based on $\mathcal{L}_{\mathrm{distill}}$ and the InfoNCE loss, $\mathcal{L}_{\mathrm{CLIP}(A)}$.

[Mathematical Expression 6]

$$\mathcal{L}_{\mathrm{student}} = \mathcal{L}_{\mathrm{CLIP}}(A) + \lambda\mathcal{L}_{\mathrm{distill}}(\bar{A}, A)$$

Here, $\lambda$ is a parameter that balances the KL divergence loss and the InfoNCE loss, and is set based on the exponential moving average (ema) in the embodiment.

Therefore, $\mathcal{L}$ which is the final loss of the MCD pre-training may be calculated as in Mathematical Expression 7.

[Mathematical Expression 7]

$$\mathcal{L} = \mathcal{L}_{\mathrm{student}} + \mathcal{L}_{\mathrm{CLIP}}(\bar{A})$$

Moreover, as described above, the parameters of the encoders 10 and 20 may be updated through the stop gradient to prevent backpropagation in the teacher image encoder 20 and the text encoder 10.
In detail, $\theta_{f_I}$ and $\theta_{\bar{f}_I}$ represent the parameters of the student encoder and the momentum teacher image encoder 20, respectively, and the update of $\theta_{\bar{f}_I}^{(t)}$ may be performed according to the following Mathematical Expression 8 at the tth step.

[Mathematical Expression 8]

$$\theta_{\bar{f}_I}^{(t)} = m\theta_{\bar{f}_I}^{(t-1)} + (1-m)\theta_{f_I}^{(t)}$$

As a result of the experiment, the most efficient training could be performed when m was 0.994.
Below, an explanation is given to compare the effectiveness of the vision-language transformer learned through MCD pre-training according to the embodiment of the present disclosure with the existing technology.
The artificial intelligence system including the vision-language transformer of the present disclosure can perform vision tasks such as image classification, segmentation, object detection, image generation, automatic caption genera-

**EP 4 664 418 A1**

tion, image search, and image description with relatively high accuracy compared to the existing transformer.

Table 1 below compares the zero-shot image classification performance of the MCD model obtained by pre-training the vision-language transformer model with the MCD pre-training method for the YFCC15M dataset, which includes 11 downstream datasets, and the vision-language transformer model trained with the existing technology on the YFCC15M dataset. In this case, whether additional supervision other than contrast loss for image-text pairs was performed is expressed as S: SSL between augmentations, E: text augmentation, N: nearest neighbor, L: masked language modeling, I: augmented information encoded with additional embedding layer X.

[Table 1]

| Method | Additional Supervision | Vision Encoder | Oxford Pets | CIFAR-10 | CIFAR-100 | SUN397 | Food-101 | Flowers | Cars | Caltech-101 | Aircraft | DTD | ImageNet | Average |
|---|---|---|---|---|---|---|---|---|---|---|---|---|---|---|
| *Zero-shot Classification:* | | | | | | | | | | | | | | |
| CLIP [14] | - | | 19.4 | 62.3 | 33.6 | 40.2 | 33.7 | 6.3 | 2.1 | 55.4 | 1.4 | 16.9 | 31.3 | 27.5 |
| SLIP [11] | S | | 28.3 | 72.2 | 45.3 | 45.1 | 44.7 | 6.8 | 2.9 | 65.9 | 1.9 | 21.8 | 38.3 | 33.9 |
| DeCLIP [10] | S+E+N+L | ViT-B/32 | 30.2 | 72.1 | 39.7 | 51.6 | 46.9 | 7.1 | 3.9 | 70.1 | 2.5 | 24.2 | 41.2 | 35.4 |
| UniCLIP [9] | S+I+X | | 32.5 | 78.6 | 47.2 | 50.4 | 48.7 | 8.1 | 3.4 | 73.0 | 2.8 | 23.3 | 42.8 | 37.3 |
| MCD (Ours) | S | | 36.8 | 80.1 | 48.4 | 51.9 | 49.6 | 8.1 | 3.7 | 73.1 | 2.7 | 28.8 | 43.4 | 38.7 |
| *Linear Probing:* | | | | | | | | | | | | | | |
| CLIP [14] | - | | 71.2 | 89.2 | 72.1 | 70.1 | 71.4 | 93.2 | 34.9 | 84.3 | 29.7 | 60.9 | 61.1 | 67.1 |
| SLIP [11] | S | | 75.4 | 90.5 | 75.3 | 73.5 | 77.1 | 96.1 | 43.0 | 87.2 | 34.1 | 71.1 | 68.1 | 71.9 |
| DeCLIP [10] | S+E+N+L | ViT-B/32 | 76.5 | 88.6 | 71.6 | 75.9 | 79.3 | 96.7 | 42.6 | 88.0 | 32.6 | 69.1 | 69.2 | 71.8 |
| UniCLIP [9] | S+I+X | | 83.1 | 92.5 | 78.2 | 77.0 | 81.3 | 97.1 | 49.8 | 88.9 | 36.2 | 72.8 | 70.8 | 75.2 |
| MCD (Ours) | S | | 85.6 | 92.7 | 79.3 | 77.6 | | | | | | | 71.3 | |

As can be seen from the table above, the MCD model that performed only the SSL between augmentations shows superior performance compared to the existing model in 9 out of 11 downstream datasets, and the average value is also significantly improved.

Therefore, the computing system 1000 can perform various artificial intelligence tasks by executing various applications including the vision-language transformer that has excellent performance for these vision tasks.

Moreover, the framework utilizing the token sparsification and knowledge distillation for this contrastive language-image pre-training can be extended and applied to pre-training for the additional forms such as audio at the level of ordinary technicians.

The embodiments according to the present disclosure described above can be implemented in the form of program instructions that can be executed through various computer components and recorded on a computer-readable recording medium. The computer-readable recording medium can include program instructions, data files, data structures, or the like, alone or in combination. The program instructions recorded on the computer-readable recording medium can be specially designed and configured for the present disclosure or can be known and available to those skilled in the art of computer software. Examples of the computer-readable recording medium include magnetic media such as hard disks, floppy disks, and magnetic tapes, optical recording media such as CD-ROMs and DVDs, magneto-optical media such as floptical disks, and hardware devices specially configured to store and execute program instructions such as ROMs, RAMs, and flash memories. Examples of program instructions include not only machine language codes, such as those produced by a compiler, but also high-level language codes that can be executed by a computer using an interpreter, or the like. A hardware device may be changed into one or more software modules to perform processing according to the present disclosure, and vice versa.

**Claims**

1. A method for pre-training a vision-language transformer (12, 140) with a dataset of a plurality of original image-text pairs by a computing system (130, 150) including a memory (112, 132, 153) and a processor (131, 151), the method comprising:

   randomly augmenting the original image to generate a plurality of augmented images;
   inputting text matched to the original image into a text encoder (10) to output text feature vector representations (T);
   inputting the original image and the plurality of augmented images into a teacher image encoder (20) to output first

13

image feature vector representations;

inputting the original image and the plurality of augmented images into a student image encoder (30) to output second image feature vector representations;

generating a first alignment matrix for the text feature vector representations (T) and the first image feature vector representations;

learning the first alignment matrix so that the text feature vector representations (T) and the first image feature vector representations are aligned to have similarity according to a positive and negative mapping relationship of the image-text pair; and

aligning the second alignment matrix to predict output of the learned first alignment matrix and performing knowledge distillation on the student image encoder (30).

2. The method of claim 1, wherein the inputting of the images into the teacher image encoder (20) to output the first image feature vector representations includes outputting the first image feature vector representations through a plurality of self-attention layers and feed-forward network layers for the original images and the plurality of augmented images.

3. The method of claim 2, wherein the inputting of the images into the student image encoder (30) to output the second image feature vector representations includes of inputting the original images and the plurality of augmented images to a token sparsification layer based on output values from the plurality of self-attention layers and performing token sparsification.

4. The method of claim 1, wherein the learning of the first alignment matrix so that the text feature vector representations (T) and the first image feature vector representations are aligned includes

determining a positive feature vector representation pair and a negative feature vector representation pair between the text feature vector representations (T) and the first image feature vector representations according to a mapping relationship between the original image-text pair and the augmented image-text pair, and

learning the teacher image encoder (20) according to a loss function that makes a distance between the positive feature vector representation pairs closer and a distance between the negative feature vector representation pairs farther for similarity alignment.

5. The method of claim 4, wherein the learning of the encoders according to the loss function includes applying a momentum stop gradient to the teacher image encoder (20) to block backpropagation during learning for similarity alignment according to the loss function.

6. The method of claim 5, wherein the performing of the knowledge distillation on the student image encoder (30) includes performing knowledge distillation so that the output value of the first alignment matrix according to the similarity alignment is predicted by the second alignment matrix.

7. The method of claim 6, wherein the performing of the knowledge distillation on the second alignment matrix includes blocking backpropagation to the text encoder (10) during the knowledge distillation.

8. The method of claim 7, wherein the performing of the knowledge distillation on the second alignment matrix includes performing knowledge distillation so that a parameter of the second alignment matrix follows a parameter of the first alignment matrix.

9. The method of claim 8, wherein the performing of the knowledge distillation so that the parameter of the second alignment matrix follows the parameter of the first alignment matrix includes updating the parameter of the first alignment matrix with an exponential moving average (EMA) based on the parameter of the second alignment matrix.

10. The method of claim 1, wherein the performing of the knowledge distillation on the second alignment matrix includes performing the knowledge distilling by defining a loss function that reflects misalignment information between the augmented image and the text through a distance between the first image feature vector representation and the text feature vector representation (T) and a distance between the second image feature vector representation and the text feature vector representation (T).

11. The method of claim 10, wherein the performing of the knowledge distillation by defining the loss function based on the distances includes calculating a first Euclidean distance between the original image feature vector representation output by the student image encoder (30) and the text feature vector representation (T), and a second Euclidean distance between the augmented image feature vector representation output by the student image encoder (30) and the text feature vector representation (T), and calculating a first log ratio that calculates a ratio of the first Euclidean distance and the second Euclidean distance in a log scale.

12. The method of claim 11, wherein the performing of the knowledge distillation by defining the loss function based on the distances includes calculating a third Euclidean distance between the original image feature vector representation output by the teacher image encoder (20) and the text feature vector representation (T), and a fourth Euclidean distance between the augmented image feature vector representation output by the teacher image encoder (20) and the text feature vector representation (T), and calculating a second log ratio that calculates a ratio of the third Euclidean distance and the fourth Euclidean distance in a log scale.

13. The method of claim 12, wherein the performing of the knowledge distillation by defining the loss function based on the distances includes performing the knowledge distillation by defining a difference between the first log ratio and the second log ratio as a loss function for aligning the second alignment matrix to be approximate to the first alignment matrix.

14. The method of claim 13, wherein the loss function for aligning the first alignment matrix and the second alignment matrix is defined as $\quad \ell_i = \left\| \log \frac{D(I_j, T_i)}{D(I'_j, T_i)} - \log \frac{D(\bar{I}_j, T_i)}{D(\bar{I}'_j, T_i)} \right\|_1$

15. The method of claim 10, further comprising performing an update through a stop gradient to prevent backpropagation between the teacher image encoder (20) and the text encoder (10).

16. An artificial intelligence system that performs a vision task, including the vision-language transformer (120, 140) pre-trained according to claim 1.

17. A vision-language transformer (120, 140) pre-trained by a computing system (130, 150) including a memory (112, 132, 153) and a processor (131, 151), the vision-language transformer (120, 140) comprising:

a text encoder (10) that inputs texts and outputs text feature vector representations (T);
a teacher image encoder (20) that inputs original images and a plurality of augmented images augmented from the original images and outputs first image feature vector representations; and
a student image encoder (30) that inputs the original images and the plurality of augmented images augmented from the original images and outputs second image feature vector representations,
wherein the teacher image encoder (20) and the text encoder (10) learn a first alignment matrix by similarity-aligning the text feature vector representations (T) and the first image feature vector representations, and
the student image encoder (30) performs knowledge distillation so that a second alignment matrix for the text feature vector representations (T) and the second image feature vector representations predicts an output value of the first alignment matrix.

# FIG. 2

**100**

Computing device

Application 1
- Machine learning library 1
- Machine earning model 1

Application 2
- Machine learning library 2
- Machine earning model 2

Application 3
- Machine learning library 3
- Machine earning model 3

Application 4
- Machine learning library N
- Machine earning model N

Sensor(s)

Context manager

Device state

Additional component(s)

## FIG. 3

**200**

# FIG. 4

# FIG. 5

## INTERNATIONAL SEARCH REPORT

| International application No. |
|---|
| **PCT/KR2024/003118** |

| A. | CLASSIFICATION OF SUBJECT MATTER |
|---|---|

**G06V 10/778**(2022.01)i; **G06V 10/96**(2022.01)i; **G06V 10/80**(2022.01)i; **G06V 30/182**(2022.01)i; **G06V 10/46**(2022.01)i; **G06N 3/0455**(2023.01)i; **G06N 3/0985**(2023.01)i

According to International Patent Classification (IPC) or to both national classification and IPC

| B. | FIELDS SEARCHED |
|---|---|

Minimum documentation searched (classification system followed by classification symbols)

G06V 10/778(2022.01); G06K 9/62(2006.01); G06N 20/00(2019.01); G06T 7/00(2006.01); G06V 10/46(2022.01); G06V 10/764(2022.01); G06V 10/774(2022.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 증강 이미지(augmented image), 텍스트(text), 사전 훈련(pre-training), 정렬 (align), 비전-언어 모델(Vision-Language Pretraining, VLP), 인코더(encoder)

| C. | DOCUMENTS CONSIDERED TO BE RELEVANT |
|---|---|

| Category* | Citation of document, with indication, where appropriate, of the relevant passages | Relevant to claim No. |
|---|---|---|
| A | LI, Yangguang et al. SUPERVISION EXISTS EVERYWHERE: A DATA EFFICIENT CONTRASTIVE LANGUAGE-IMAGE PRE-TRAINING PARADIGM. arXiv:2110.05208v2. 14 March 2022. [Retrieved on 23 May 2024]. Retrieved from <https://arxiv.org/pdf/2110.05208v2.pdf>. See pages 1-17 and figures 4-5. | 1-17 |
| A | EP 3754548 A1 (SAP SE) 23 December 2020 (2020-12-23) See paragraphs [0042]-[0094] and figures 1-5. | 1-17 |
| A | CN 115410031 A (YANGTZE RIVER DELTA RESEARCH INSTITUTE OF UESTC (HUZHOU)) 29 November 2022 (2022-11-29) See paragraphs [0042]-[0045] and figure 2. | 1-17 |
| A | CN 114005012 A (BEIJING SENSETIME TECHNOLOGY DEVELOPMENT CO., LTD.) 01 February 2022 (2022-02-01) See claim 1. | 1-17 |

☑ Further documents are listed in the continuation of Box C.   ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **11 June 2024** | **11 June 2024** |

| Name and mailing address of the ISA/KR | Authorized officer |
|---|---|
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT

| International application No. |
| --- |
| **PCT/KR2024/003118** |

### C. DOCUMENTS CONSIDERED TO BE RELEVANT

| Category* | Citation of document, with indication, where appropriate, of the relevant passages | Relevant to claim No. |
| --- | --- | --- |
| A | JP 2023-017759 A (BEIJING BAIDU NETCOM SCIENCE & TECHNOLOGY CO., LTD.) 07 February 2023 (2023-02-07)<br>    See paragraph [0035] and figure 3. | 1-17 |

**INTERNATIONAL SEARCH REPORT**
Information on patent family members

International application No.

**PCT/KR2024/003118**

| Patent document cited in search report | | | Publication date (day/month/year) | Patent family member(s) | | | Publication date (day/month/year) |
|---|---|---|---|---|---|---|---|
| EP | 3754548 | A1 | 23 December 2020 | None | | | |
| CN | 115410031 | A | 29 November 2022 | None | | | |
| CN | 114005012 | A | 01 February 2022 | None | | | |
| JP | 2023-017759 | A | 07 February 2023 | CN | 114120074 | A | 01 March 2022 |
| | | | | CN | 114120074 | B | 12 December 2023 |
| | | | | EP | 4071729 | A2 | 12 October 2022 |
| | | | | US | 2022-0392205 | A1 | 08 December 2022 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **ALEC RADFORD** ; **JONG WOOK KIM** ; **CHRIS HALLACY** ; **ADITYA RAMESH** ; **GABRIEL GOH** ; **SANDHINI AGARWAL** ; **GIRISH SASTRY** ; **AMANDA ASKELL** ; **PAMELA MISHKIN** ; **JACK CLARK**. *Learning Transferable Visual Models From Natural Language Supervision*, 26 February 2021
- **YUTING GAO** ; **JINFENG LIU** ; **ZIHAN XU** ; **JUN ZHANG** ; **KE LI** ; **CHUNHUA SHEN**. Pyramidclip: Hierarchical feature alignment for vision-language model pretraining. *arXiv preprint arXiv:2204.14095*, 2022, 1, 2, 3

- **JANGHYEON LEE** ; **JONGSUK KIM** ; **HYOUNGUK SHON** ; **BUMSOO KIM** ; **SEUNG HWAN KIM** ; **HONGLAK LEE** ; **JUNMO KIM**. Uniclip: Unified framework for contrastive language-image pretraining. *Advances in Neural Information Processing Systems*, 2022, 1, 2, 3, 5, 6, 7